# EUROPÄISCHE PATENTSCHRIFT

(11) **EP 3 873 843 B1**
(45) Veröffentlichungstag und Bekanntmachung des Hinweises auf die Patenterteilung: **04.12.2024**
(21) Anmeldenummer: 19797624.4
(22) Anmeldetag: 28.10.2019
(51) Int. Cl.: B60L 50/53, B60L 50/60, B60L 50/61, B60L 55/00, B60L 58/13, B66F 7/16, B66C 13/22, B66C 13/26, B66C 23/38

(54) **HAFENMOBILKRAN MIT EINEM VERBESSERTEN ENERGIEVERSORUNGSSYSTEM**
MOBILE HARBOUR CRANE HAVING AN IMPROVED ENERGY-SUPPLY SYSTEM
GRUE PORTUAIRE MOBILE COMPRENANT UN SYSTÈME D'ALIMENTATION EN ÉNERGIE AMÉLIORÉ

(30) Priorität: 30.10.2018 DE 102018127124
(43) Veröffentlichungstag der Anmeldung: 08.09.2021
(73) Patentinhaber: Konecranes Global Corporation, 05830 Hyvinkää (FI)
(72) Erfinder: MÜLLER, Jörg, 41540 Dormagen (DE); BRUCHERSEIFER, Uwe, 51645 Gummersbach (DE)
(74) Vertreter: Moser Götze & Partner Patentanwälte mbB
(86) Internationale Anmeldenummer: PCT/EP2019/079355
(87) Internationale Veröffentlichungsnummer: WO 2020/089149

(56) Entgegenhaltungen:
- WO-A1-2011/098542
- DE-A1- 102012 201 140
- DE-U1- 202016 006 966
- US-A1- 2012 160 796

## Beschreibung

Die Erfindung betrifft einen Hafenmobilkran gemäß dem Oberbegriff von Anspruch 1.

Ein derartiger Hafenmobilkran ist aus der WO 2011/098542 A1 bekannt. Dieses Dokument offenbart den Oberbegriff des Anspruchs 1.

Aus der Patentschrift US 7 554 278 B2 ist ein Hybridantriebssystem eines Mobilkrans bekannt, das einen diesel-elektrischen Antrieb und eine als Energiespeichersystem dienende Batterieeinheit aufweist, die gemeinsam einen Hubmotor mit elektrischer Energie versorgen können.

Des Weiteren sind bereits aus dem Firmenprospekt der Konecranes Global Corporation mit dem Titel "Diesel-Electric Model 4 Mobile Harbor Cranes" sogenannte Hafenmobilkrane bekannt, mit denen Container oder Schüttgüter in Seehäfen oder Container-Terminals umgeschlagen werden. Ein derartiger Hafenmobilkran besteht im Wesentlichen aus einem Unterwagen, mit dem sich der Hafenmobilkran auf dem Land, beispielsweise einem Kai, oder auf einem Schwimmponton abstützt, und einem um eine vertikale Achse drehbar auf dem Unterwagen gelagerten Oberwagen. Der Unterwagen kann über Reifen auf dem Kai oder über Schienenräder auf Schienen verfahrbar sein. Während des Umschlagbetriebes wird der Unterwagen über Stützen abgestützt. Auf dem Oberwagen sind ein sich in Vertikalrichtung erstreckender Turm, ein Drehwerk für das Drehen des Oberwagens, ein Hubwerk für das Heben einer Last sowie ein Gegengewicht angeordnet. Des Weiteren ist an dem Turm, etwa im Bereich seiner halben Länge und auf der dem Gegengewicht abgewandten Seite, ein Ausleger angelenkt. Der Ausleger ist um eine horizontale Wippachse schwenkbar mit dem Turm verbunden und zusätzlich über einen an dem Ausleger und unten an dem Oberwagen angelenkten Wippzylinder aus seiner seitlich auskragenden Betriebsstellung in eine aufrechte Ruhestellung verschwenkbar. Außerdem ist der Ausleger in üblicher Weise als Gittermast ausgebildet.

Derartige Hafenmobilkrane weisen ein Energieversorgungssystem auf, welches für einen Normalbetrieb des Hafenmobilkrans von mindestens einer Primärenergiequelle zur Versorgung von Antrieben mit elektrischer Energie gespeist wird, um für die jeweiligen Kran-Hauptfunktionen die Hydraulikpumpen oder Elektromotoren der jeweiligen Antriebe zu versorgen. Als Primärenergiequellen dienen beispielsweise ein stationäres Hafenstromnetz, über das eine Fremdeinspeisung von elektrischem Strom in das Energieversorgungssystem erfolgt, oder ein bordeigener diesel-elektrischer Antrieb oder ein diesel-hydraulischer Antrieb. Nachteilig ist hierbei, dass bei einem Ausfall der jeweiligen Primärenergiequelle der Betrieb des Hafenmobilkrans unterbrochen werden muss. Auch wenn ein Hafenmobilkran mit Fremdeinspeisung und diesel-elektrischem Antrieb ausgestattet ist, kann eine hafenseitige Stromunterbrechung und ein gleichzeitiger Ausfall des Dieselmotors noch immer dazu führen, dass der Kranbetrieb unterbrochen werden muss und es keinerlei Notfunktion für das Fahren, Lenken, Abstützen, Heben, Senken, Wippen und Drehen gibt.

Aus der DE 20 2016 006 966 U1 ist ein Mobilkran zur Verwendung auf öffentlichen Straßen bekannt, der neben einem Verbrennungsmotor beziehungsweise einer Brennstoffzelle eine Batterie aufweist. Im Fahr- und Kranbetrieb wird ein Elektromotor des Mobilkrans überwiegend durch die Batterie mit Energie versorgt. Ein Hilfs- oder Notbetrieb ist in diesem Dokument nicht erwähnt.

Auch aus der DE 199 48 831 A1 ist ein Mobilkran zur Verwendung auf öffentlichen Straßen bekannt, dessen Fahr- und Kranbetrieb mittels eines Elektromotors erfolgen kann. Die Energieversorgung für den Fahr- und Kranbetrieb kann über einen dieselelektrischen Antrieb, eine Batterie oder ein Brennstoffzellensystem erfolgen. Ein Hilfs- oder Notbetrieb ist in diesem Dokument nicht erwähnt.

Ein weiterer Mobilkran ist aus der US 2012/160796 A1 bekannt.

Die DE 10 2010 063 911 A1 offenbart einen Kran, der von einer als Dieselmotor ausgebildeten Primärenergiequelle mit Energie versorgt wird. Zusätzlich kann der Kran eine Energiespeichereinheit aufweisen. In einem Notbetrieb kann die Energieversorgung durch eine als Verbrennungsmotor ausgebildete Sekundärenergiequelle erfolgen.

Die DE 10 2010 022 601 A1 offenbart einen Kran mit einem Antriebsmotor und einem Zusatzaggregat, welches bei Hilfsfunktionen bei Stillstand des Antriebsmotors übernimmt. Über eine Batterie des Krans können Nebenverbraucher wie beispielsweise eine Beleuchtung versorgt werden.

Ausgehend von diesem Stand der Technik liegt der vorliegenden Erfindung die Aufgabe zugrunde, einen Hafenmobilkran mit einem verbesserten Energieversorgungssystem zu schaffen.

Diese Aufgabe wird durch einen Hafenmobilkran mit den Merkmalen des Anspruchs 1 gelöst. Vorteilhafte Ausgestaltungen der Erfindung sind in den abhängigen Ansprüchen 2 bis 8 sowie der nachfolgenden Beschreibung angegeben.

Erfindungsgemäß wird bei einem Hafenmobilkran, der insbesondere für den Umschlag von Containern oder Schüttgütern in Seehäfen oder Container-Terminals und somit nicht zur Verwendung auf öffentlichen Straßen vorgesehen ist, mit einem Unterwagen und einem daran befestigten Fahrwerk, das insbesondere über Reifen auf einem Kai oder über Schienenräder auf Schienen verfahrbar ist, mit einer Abstützvorrichtung zum Abstützen des Hafenmobilkrans, insbesondere im Umschlagbetrieb, einem Oberwagen mit einem sich in Vertikalrichtung erstreckenden Turm, insbesondere mit einem Gegengewicht, einem den Oberwagen mit dem Unterwagen verbindenden Drehwerk, einem Ausleger, insbesondere als Gittermast ausgebildet, einem den Ausleger mit dem Oberwagen verbindenden Wippwerk, und einem Hubwerk, wobei der Hafenmobilkran ein bordeigenes Energieversorgungssystem zur Versorgung von Antrieben des Fahrwerks, der Abstützvorrichtung, des Drehwerks, des Wippwerks und des Hubwerks mit elektrischer Energie aufweist, wobei die Antriebe in einem Normalbetrieb des Hafenmobilkrans mit der benötigten elektrischen Energie von einer Primärenergiequelle versorgt werden, wobei die elektrische Energie über ein im bordeigenen Energieversorgungssystem vorhandenes bordeigenes Kranstromnetz übertragen wird, ein verbessertes Energieversorgungssystem des Hafenmobilkrans dadurch geschaffen, dass das bordeigene Energieversorgungssystem für einen Hilfsbetrieb und/oder einen Notbetrieb I und/oder einen Notbetrieb II des Hafenmobilkrans einen Langzeit-Energiespeicher aufweist, um im Hilfsbetrieb und/oder im Notbetrieb I und/oder im Notbetrieb II zumindest einige der Antriebe über das bordeigene Kranstromnetz durch den Langzeit-Energiespeicher anstatt durch die Primärenergiequelle mit der benötigten elektrischen Energie zu versorgen, wobei das bordeigene Energieversorgungssystem ein Steuer- und Regelungssystem umfasst, das im Hilfsbetrieb eine alleinige Versorgung der Antriebe des Fahrwerks, der Abstützvorrichtung, des Drehwerks, des Wippwerks und des Hubwerks mit elektrischer Energie durch den Langzeit-Energiespeicher zulässt und/oder im Notbetrieb I eine alleinige Versorgung der Antriebe des Fahrwerks, der Abstützvorrichtung, des Drehwerks, des Wippwerks und des Hubwerks mit elektrischer Energie dem Langzeit-Energiespeicher zwingend zuweist und/oder im Notbetrieb II die Versorgung des Antriebs des Fahrwerks und/oder des Antriebs des Hubwerks mit elektrischer Energie dem Langzeit-Energiespeicher zwingend zuweist und vorzugsweise hierauf beschränkt, wobei das Steuer- und Regelungssystem im Notbetrieb II eine Entladung des Langzeit-Energiespeichers auch unterhalb der vorgegebenen unteren Ladungsschwelle zulässt.

Mit anderen Worten wird also erfindungsgemäß ein bordeigenes Energieversorgungssystem verbaut, das als Redundanz zur Primärenergiequelle für einen Hilfsbetrieb und/oder einen Notbetrieb I und/oder einen Notbetrieb II einen an das bordeigene Kranstromnetz angeschlossenen Langzeit-Energiespeicher aufweist, der im Hilfsbetrieb und/oder im Notbetrieb I und/oder im Notbetrieb II anstelle der Primärenergiequelle zumindest einige der Antriebe mit elektrischer Energie versorgt. Durch den Einsatz des Langzeit-Energiespeichers werden somit Ausfallzeiten des Hafenmobilkrans aufgrund fehlender Energieversorgung durch die im Normalbetrieb zur Versorgung der Antriebe verwendete Primärenergiequelle minimiert, da deren Ausfall durch den Langzeit-Energiespeicher zumindest teilweise kompensiert werden kann. Zudem wird ein rein elektrischer Betrieb des Hafenmobilkrans in Hafenbereichen ohne Zugriff auf eine externe Primärenergiequelle ermöglicht.

Das erfindungsgemäße bordeigene Energieversorgungssystem umfasst mindestens einen Langzeit-Energiespeicher, ein bordeigenes Kranstromnetz und die Antriebe des Fahrwerks, der Abstützvorrichtung, des Drehwerks, des Wippwerks und des Hubwerks. Die Antriebe sind Teil eines Energieverbrauchersystems und können insbesondere mindestens einen Elektromotor und/oder mindestens eine Hydraulikpumpe aufweisen.

Die Primärenergiequelle versorgt über das bordeigene Kranstromnetz die verwendeten Antriebe mit elektrischer Energie. Zudem kann auch über die Primärenergiequelle der Langzeit-Energiespeicher geladen werden. Die Primärenergiequelle kann eine bordeigene und/oder eine externe Primärenergiequelle sein. Die bordeigene Primärenergiequelle ist in diesem Zusammenhang eine von dem Hafenmobilkran mitgeführte und an das bordeigene Kranstromnetz angeschlossene und somit im bordeigenen Energieversorgungssystem vorgesehene Primärenergiequelle. Die bordeigene Primärenergiequelle kann insbesondere in Form eines diesel-elektrischen Antriebs ausgebildet sein, der im Wesentlichen einen Dieselmotor und einen Generator zum Umwandeln der vom Dieselmotor erzeugten mechanischen Energie in elektrische Energie umfasst. Die externe Primärenergiequelle ist in diesem Zusammenhang eine zur Fremdeinspeisung von elektrischer Energie über einen Anschluss an das bordeigene Kranstromnetz anschließbare Primärenergiequelle außerhalb des Hafenmobilkrans. Die externe Primärenergiequelle kann insbesondere eine stationäre Primärenergiequelle sein, wie beispielsweise ein Hafenstromnetz. Der Anschluss für die externe Primärenergiequelle an das bordeigene Kranstromnetz kann je nach Ausgestaltung beispielsweise zur Herstellung einer Steckverbindung und/oder einer Kabelanbindung mit Kabeltrommel an die externe Primärenergiequelle genutzt werden.

Der Langzeit-Energiespeicher ist Teil des bordeigenen Energieversorgungssystems und kann Energie aus der mindestens einen Primärenergiequelle, die nicht für die Energieversorgung der Antriebe benötigt wird, sowie Energie aus einer Rückspeisung aus einem generatorischen Betrieb des mindestens einen verwendeten Antriebs speichern und bei Bedarf zur Energieversorgung des mindestens einen verwendeten Antriebs abgeben. Der Langzeit-Energiespeicher ist derart ausgestaltet und eingerichtet, dass im Hilfsbetrieb und/oder im Notbetrieb I mittels des Langzeit-Energiespeichers die Energieversorgung der Antriebe des Fahrwerks, der Abstützvorrichtung, des Drehwerks, des Wippwerks und des Hubwerks sichergestellt ist, damit zumindest die Kran-Hauptfunktionen Fahren und Lenken des Fahrwerks, Abstützen der Abstützvorrichtung, Drehen des Drehwerks, Wippen des Wippwerks und Heben und Senken des Hubwerks nutzbar sind, und im Notbetrieb II mittels des Langzeit-Energiespeichers zumindest die Energieversorgung des Antriebs des Fahrwerks und/oder des Antriebs des Hubwerks sichergestellt ist, damit zumindest die Kran-Hauptfunktionen Fahren und Lenken des Fahrwerks und/oder Senken des Hubwerks nutzbar sind, insbesondere eine Last kontrolliert abgelegt und/oder der Hafenmobilkran aus dem Arbeitsbereich und/oder Gefahrenbereich herausgefahren werden kann. In einer vorteilhaften Ausführungsform wird als Langzeit-Energiespeicher mindestens eine wiederaufladbare Batterie, vorzugsweise eine Li-lonen-Batterie, eingesetzt.

Das bordeigene Kranstromnetz ist Teil des bordeigenen Energieversorgungssystems und verbindet über seine elektrischen Verbindungen die mindestens eine Primärenergiequelle mit dem Energieverbrauchersystem beziehungsweise dessen verwendeten Antrieb(en), die mindestens eine Primärenergiequelle mit dem Langzeit-Energiespeicher und den Langzeit-Energiespeicher mit dem Energieverbrauchersystem beziehungsweise dem mindestens einen verwendeten Antrieb. Außerdem umfasst das bordeigene Kranstromnetz ein Steuer- und Regelungssystem, welches die über die elektrischen Verbindungen erfolgenden Stromflüsse zwischen den vorgenannten Komponenten steuert und regelt. Es kann vorgesehen sein, dass nur zwischen dem Langzeit-Energiespeicher und dem Energieverbrauchersystem, insbesondere dessen mindestens einem verwendeten Antrieb, ein Stromfluss in beide Richtungen möglich ist, sodass insbesondere eine Rückspeisung aus einem generatorischen Betrieb des jeweiligen Antriebs, beispielsweise des Antriebs des Hubwerks beim Senken einer Last, zur Ladung des Langzeit-Energiespeichers genutzt werden kann. Es ist aber auch möglich, dass im Zuge einer Rückspeisung zwischen dem Energieverbrauchersystem beziehungsweise dessen Antrieb(en) und der externen Primärenergiequelle ein Stromfluss zurück zur externen Primärenergiequelle erfolgt.

Als Normalbetrieb des Hafenmobilkrans wird ein Kranbetrieb mit bestimmungsgemäßer Energieversorgung des Hafenmobilkrans bezeichnet, wobei die Energieversorgung aller Antriebe durch die vorgesehene, bordeigene und/oder externe, Primärenergiequelle sichergestellt ist. Im Normalbetrieb sind damit alle Funktionen des Hafenmobilkrans nutzbar und eine Überlagerung dieser Funktionen und der entsprechenden Bewegungen der zugehörigen Antriebe möglich.

Als Hilfsbetrieb des Hafenmobilkrans wird ein Kranbetrieb mit bestimmungsgemäßer Energieversorgung des Hafenmobilkrans bezeichnet, wobei zumindest die Energieversorgung der Antriebe des Fahrwerks, der Abstützvorrichtung, des Drehwerks, des Wippwerks und des Hubwerks durch den erfindungsgemäß dafür vorgesehenen Langzeit-Energiespeicher sichergestellt ist. Im Hilfsbetrieb sind zumindest die Kran-Hauptfunktionen Fahren und Lenken des Fahrwerks, Abstützen der Abstützvorrichtung, Drehen des Drehwerks, Wippen des Wippwerks und Heben und Senken des Hubwerks nutzbar. Hierbei kann jedoch als Einschränkung gegenüber dem Normalbetrieb vorgesehen sein, dass einige Funktionen, beispielsweise die Funktionen Heben, Senken, Wippen und/oder Drehen nur im Einzelmodus verwendet werden können. Im Einzelmodus ist dann eine Überlagerung dieser Funktionen und der entsprechenden Bewegungen der zugehörigen Antriebe nicht vorgesehen. Eine Überlagerung dieser Funktionen ist allerdings prinzipiell möglich. Der Hilfsbetrieb wird bei intendierten Unterbrechungen, insbesondere Abkopplungen, von der Versorgung der im Normalbetrieb verwendeten externen Primärenergiequelle angewendet, beispielsweise bei zwischenzeitlicher Verwendung des Hafenmobilkrans in einem Hafenbereich ohne Zugriff auf das Hafenstromnetz. Außerdem wird der Hilfsbetrieb bei intendierten Unterbrechungen von der Energieversorgung der im Normalbetrieb verwendeten bordeigenen Primärenergiequelle angewendet, beispielsweise bei zwischenzeitlicher Verwendung des Hafenmobilkrans in einem Hafenbereich, in dem der Betrieb eines diesel-elektrischen Antriebs nicht erwünscht oder nicht erlaubt ist und deshalb der Dieselmotor geplant abgeschaltet wird. Dies kann in Hafenbereichen mit entsprechenden Umwelt- und/oder Arbeitsschutzbestimmungen der Fall sein. Die geplante Unterbrechung kann dann beispielsweise vom Kranführer veranlasst werden. Der Hilfsbetrieb kann jedoch nur bei einem Ladungsstand des Langzeit-Energiespeichers genutzt werden, der über einer vorgegebenen unteren Ladungsschwelle liegt. Bei Erreichen der vorgegebenen unteren Ladungsschwelle, und sofern keine bordeigene Primärenergiequelle verfügbar ist, wird automatisch eine Umschaltung in den unten näher beschriebenen Notbetrieb II bewirkt.

Als Notbetrieb I des Hafenmobilkrans wird ein Kranbetrieb mit nicht bestimmungsgemäßer Energieversorgung des Hafenmobilkrans bezeichnet, wobei die Energieversorgung der Antriebe des Fahrwerks, der Abstützvorrichtung, des Drehwerks, des Wippwerks und des Hubwerks durch den erfindungsgemäß dafür vorgesehenen Langzeit-Energiespeicher sichergestellt ist. Im Notbetrieb I sind zumindest die Kran-Hauptfunktionen Fahren und Lenken des Fahrwerks, Abstützen der Abstützvorrichtung, Drehen des Drehwerks, Wippen des Wippwerks und/oder Heben und Senken des Hubwerks nutzbar. Hierbei kann jedoch als Einschränkung gegenüber dem Normalbetrieb vorgesehen sein, dass einige Funktionen, beispielsweise die Funktionen Heben, Senken, Wippen und/oder Drehen nur im Einzelmodus verwendet werden können. Im Einzelmodus ist dann eine Überlagerung dieser Funktionen und der entsprechenden Bewegungen der zugehörigen Antriebe nicht vorgesehen. Eine Überlagerung dieser Funktionen ist allerdings prinzipiell möglich. Der Notbetrieb I wird bei Ausfall aller im Normalbetrieb verwendeten Primärenergiequellen und einem Ladungsstand des Langzeit-Energiespeichers, der über einer vorgegebenen unteren Ladungsschwelle liegt, angewendet. Bei Erreichen der vorgegebenen unteren Ladungsschwelle wird automatisch eine Umschaltung in den nachfolgend beschriebenen Notbetrieb II bewirkt. Der Notbetrieb I unterscheidet sich vom Hilfsbetrieb also im Wesentlichen dadurch, dass die im Normalbetrieb vorgesehene Energieversorgung der Antriebe im Hilfsbetrieb geplant und im Notbetrieb I ungeplant unterbrochen ist. Anders als für einen Wechsel vom Normalbetrieb in den Hilfsbetrieb ist hierfür keine Veranlassung durch einen Kranführer erforderlich, sondern lediglich die ungeplante Unterbrechung der bis dahin durch die Primärenergiequelle erfolgenden Energieversorgung der Antriebe, beispielsweise durch einen Stromausfall im Hafenstromnetz.

Als Notbetrieb II des Hafenmobilkrans wird ein Kranbetrieb mit nicht bestimmungsgemäßer Energieversorgung des Hafenmobilkrans bezeichnet, wobei zumindest die Energieversorgung des Antriebs des Fahrwerks und/oder des Antriebs des Hubwerks durch den erfindungsgemäß dafür vorgesehenen Langzeit-Energiespeicher sichergestellt ist. Im Notbetrieb II sind zumindest die Kran-Hauptfunktionen Fahren und Lenken des Fahrwerks und/oder Senken des Hubwerks nutzbar. Besonders vorteilhaft ist vorgesehen, dass im Notbetrieb II zumindest eine Last kontrolliert abgelegt und/oder der Hafenmobilkran aus dem Arbeitsbereich und/oder Gefahrenbereich herausgefahren werden kann. Hierbei ist jedoch als Einschränkung gegenüber den vorgenannten Betriebsarten vorgesehen, dass die Kran-Hauptfunktionen Fahren und Lenken des Fahrwerks und/oder Senken des Hubwerks nur im Einzelmodus verwendet werden können. Im Einzelmodus ist dann eine Überlagerung dieser Funktionen und der entsprechenden Bewegungen der zugehörigen Antriebe nicht vorgesehen und nicht möglich. Der Notbetrieb II wird bei Ausfall aller im Normalbetrieb verwendeten Primärenergiequellen und einem Ladungsstand des Langzeit-Energiespeichers, der der vorgegebenen unteren Ladungsschwelle entspricht oder darunter liegt, angewendet. Beim Notbetrieb II ist die Unterbrechung von allen im Normalbetrieb für die Energieversorgung der Antriebe verwendeten Primärenergiequellen ebenso wie beim Notbetrieb I ungeplant.

In einer vorteilhaften Ausgestaltung ist vorgesehen, dass das bordeigene Energieversorgungssystem des Hafenmobilkrans, insbesondere dessen bordeigenes Kranstromnetz, zudem das Steuer- und Regelungssystem, das insbesondere ein Steuergerät und eine Regelungseinheit aufweist, umfasst, welches die Energiequelle zur Energieversorgung der Antriebe im Normalbetrieb, Hilfsbetrieb, Notbetrieb I und Notbetrieb II jeweils vorgibt und/oder zulässt. Das Steuer- und Regelungssystem weist in vorteilhafter Weise ein Managementsystem für den Langzeit-Energiespeicher auf. Im Normalbetrieb weist das Steuer- und Regelungssystem die Energieversorgung aller Antriebe der dafür vorgesehenen Primärenergiequelle zu. Im Hilfsbetrieb lässt das Steuer- und Regelungssystem eine alleinige Versorgung der Antriebe des Fahrwerks, der Abstützvorrichtung, des Drehwerks, des Wippwerks und des Hubwerks mit elektrischer Energie durch den Langzeit-Energiespeicher zu. Sofern als Primärenergiequelle ein diesel-elektrischer Antrieb verwendet wird, kann alternativ das Steuer- und Regelungssystems so ausgelegt sein, dass bei einem entsprechend vorgegebenem Ladungsstand des Langzeit-Energiespeichers automatisch vom Normalbetrieb in den Hilfsbetrieb gewechselt wird. Damit wird eine alleinige Versorgung der Antriebe des Fahrwerks, der Abstützvorrichtung, des Drehwerks, des Wippwerks und des Hubwerks dem Langzeit-Energiespeicher zugewiesen, um insbesondere durch die Vermeidung von überflüssigen Energieumwandlungen den Gesamt-Wirkungsgrad des Energieversorgungssystems zu optimieren und zugleich die CO2-Emissionen lokal zu verringern. Im Notbetrieb I weist das Steuer- und Regelungssystem eine alleinige Versorgung der Antriebe des Fahrwerks, der Abstützvorrichtung, des Drehwerks, des Wippwerks und des Hubwerks mit elektrischer Energie dem Langzeit-Energiespeicher zu. Im Hilfsbetrieb und/oder im Notbetrieb I lässt das Steuer- und Regelungssystem, insbesondere das darin enthaltene Managementsystem für den Langzeit-Energiespeicher, eine Entladung des Langzeit-Energiespeichers nur bis zu einer vorgegebenen unteren Ladungsschwelle zu, insbesondere um in einem etwaigen Notbetrieb II noch die erforderliche Energie zur Verfügung stellen zu können. Im Notbetrieb II weist das Steuer- und Regelungssystem die Energieversorgung des Antriebs des Fahrwerks und/oder des Antriebs des Hubwerks mit elektrischer Energie zwingend dem Langzeit-Energiespeicher zu und beschränkt diese vorzugsweise darauf. Im Notbetrieb II lässt das Steuer- und Regelungssystem, insbesondere das darin enthaltene Managementsystem für den Langzeit-Energiespeicher, eine Entladung auch unterhalb der vorgegebenen unteren Ladungsschwelle zu. Das Steuer- und Regelungssystem ist außerdem derart ausgestaltet, dass der Hafenmobilkran bei Ausfall des Langzeit-Energiespeichers seinen Normalbetrieb fortsetzen kann, sofern die hierfür erforderliche Primärenergiequelle zur Energieversorgung der Antriebe verfügbar ist.

In konstruktiv einfacher Weise ist vorgesehen, dass die Ladung des Langzeit-Energiespeichers über das bordeigene Kranstromnetz durch die im Normalbetrieb verwendete Primärenergiequelle erfolgt. Zusätzlich kann auch eine Rückspeisung aus einem generatorischen Betrieb des Energieverbrauchersystems beziehungsweise mindestens eines Antriebs hiervon, beispielsweise des Antriebs des Hubwerks beim Senken einer Last, zur Ladung des Langzeit-Energiespeichers genutzt werden. Eine schonende Ladung des Langzeit-Energiespeichers kann in vorteilhafter Weise dadurch erreicht werden, dass das Steuer- und Regelungssystem, insbesondere das darin enthaltene Managementsystem für den Langzeit-Energiespeicher, vorzugsweise eine Ladung des Langzeit-Energiespeichers nur bis zu einer vorgegebenen oberen Ladungsschwelle zulässt, insbesondere um eine Überladung des Langzeit-Energiespeichers zu vermeiden. Falls nach Erreichen der oberen Ladungsschwelle weitere Energie aus einem generatorischen Betrieb des mindestens einen verwendeten Antriebs verfügbar ist, kann bei bestehendem Anschluss an eine externe Primärenergiequelle vorgesehen sein, dass eine Rückspeisung dieser Energie in die externe Primärenergiequelle erfolgt. In diesem Fall ist zwischen dem Energieverbrauchersystem beziehungsweise dessen verwendeten Antrieb(en) und der externen Primärenergiequelle ein Stromfluss in beide Richtungen möglich.

Es ist außerdem von besonderem Vorteil, dass bei einer angestrebten modularen Bauweise der nötigen Baugruppen und Funktionalitäten der Langzeit-Energiespeicher sowie das Steuer- und Regelungssystem, insbesondere das darin enthaltene Managementsystem für den Langzeit-Energiespeicher, auch in bestehende Hafenmobilkrane als Erweiterung nachgerüstet werden können.

In einer bevorzugten ersten Ausführungsform des Hafenmobilkrans ist vorgesehen, dass die im Normalbetrieb verwendete Primärenergiequelle eine externe Primärenergiequelle ist, insbesondere ein Hafenstromnetz. Der Hafenmobilkran hat keine zusätzliche Primärenergiequelle und damit insbesondere keine bordeigene Primärenergiequelle. Sobald und solange die externe Primärenergiequelle zur Energieversorgung der Antriebe verfügbar und dementsprechend der Hafenmobilkrans im Normalbetrieb betreibbar ist, gibt das Steuer-und Regelungssystem die Verwendung dieser Energiequelle vor. Hierzu kann beispielsweise ein Signal vom Steuergerät an die Regelungseinheit gesendet werden, welches die elektrische Verbindung zum Anschluss der externen Primärenergiequelle aktiviert. Im Hilfsbetrieb oder im Notbetrieb I oder im Notbetrieb II übernimmt der Langzeit-Energiespeicher die Energieversorgung zumindest einiger der Antriebe gemäß der oben beschriebenen Kriterien für den jeweiligen Betrieb. Die Ladung des Langzeit-Energiespeichers erfolgt während des Normalbetriebs über das bordeigene Kranstromnetz durch die externe Primärenergiequelle oder durch eine Rückspeisung aus einem oder mehreren der Antriebe. Ein Hauptvorteil dieser Ausführungsform ist, dass durch den möglichen Notbetrieb I und/oder Notbetrieb II Ausfallzeiten des Hafenmobilkrans minimiert werden, die ansonsten bei einem Ausfall der einzigen vorgesehenen Primärenergiequelle auftreten würden, und dass ein Hilfsbetrieb mittels des Langzeit-Energiespeichers möglich ist, beispielsweise bei Verwendung des Hafenmobilkrans in einem Hafenbereich ohne Zugriff auf das Hafenstromnetz. Vorteilhaft kann dadurch gänzlich auf den Einbau eines diesel-elektrischen Antriebs zur Versorgung des Energieverbrauchersystems beziehungsweise der zugehörigen Antriebe verzichtet werden. Weitere Vorteile dieser Ausführungsform sind somit die Vermeidung von lokalem CO2-Ausstoß und damit eine deutliche Verbesserung des ökologischen Fußabdrucks des Hafens, die Einsparung von Kraftstoff und sonstigen Motorbetriebsmitteln sowie die Vermeidung von Wartungszeiten am sonst erforderlichen Dieselmotor.

Bei einer alternativen zweiten Ausführungsform des Hafenmobilkrans ist vorgesehen, dass die im Normalbetrieb verwendete Primärenergiequelle eine bordeigene Primärenergiequelle ist, insbesondere ein diesel-elektrischer Antrieb. Sobald und solange diese Primärenergiequelle zur Energieversorgung der Antriebe verfügbar und dementsprechend der Hafenmobilkran im Normalbetrieb betreibbar ist, gibt das Steuer-und Regelungssystem die Verwendung dieser Energiequelle vor. Der Hafenmobilkran benötigt dementsprechend keinen Anschluss für eine externe Primärenergiequelle und kann somit beispielsweise unabhängig von einem Hafenstromnetz im Normalbetrieb betrieben werden. Im Hilfsbetrieb oder im Notbetrieb I oder im Notbetrieb II übernimmt der Langzeit-Energiespeicher die Versorgung zumindest einiger der Antriebe gemäß der oben beschriebenen Kriterien für den jeweiligen Betrieb. Die Ladung des Langzeit-Energiespeichers erfolgt während des Normalbetriebs über das bordeigene Kranstromnetz durch die bordeigene Primärenergiequelle oder durch eine Rückspeisung aus einem oder mehreren der Antriebe. Ein Hauptvorteil dieser Ausführungsform ist, dass durch den möglichen Notbetrieb I und/oder Notbetrieb II Ausfallzeiten des Hafenmobilkrans minimiert werden, die ansonsten bei einem Ausfall der einzigen vorgesehenen Primärenergiequelle auftreten würden, und dass ein Hilfsbetrieb mittels des Langzeit-Energiespeichers möglich ist, beispielsweise bei Verwendung des Hafenmobilkrans in einem Hafenbereich, in dem der Betrieb eines diesel-elektrischen Antriebs nicht erwünscht oder nicht erlaubt ist.

In einer alternativen dritten Ausführungsform des Hafenmobilkrans ist vorgesehen, dass die im Normalbetrieb verwendete Primärenergiequelle eine erste, externe Primärenergiequelle, insbesondere ein Hafenstromnetz, und eine zweite, bordeigene Primärenergiequelle, insbesondere einen diesel-elektrischen Antrieb, umfasst. Besonders vorteilhaft ist vorgesehen, dass, sobald und solange die externe Primärenergiequelle verfügbar ist und dementsprechend der Hafenmobilkran im Normalbetrieb betreibbar ist, das Steuer-und Regelungssystem die Verwendung dieser Energiequelle vorgibt. Falls diese Energiequelle nicht verfügbar ist, gibt das Steuer- und Regelungssystem die Verwendung der bordeigenen Primärenergiequelle zur Energieversorgung der Antriebe vor, wobei auch hier der Hafenmobilkran im Normalbetrieb betreibbar ist. Im Hilfsbetrieb lässt das Steuer-und Regelungssystem eine Energieversorgung der Antriebe sowohl durch die bordeigene Primärenergiequelle als auch durch den Langzeit-Energiespeicher zu. Falls der Ladungsstand des Langzeit-Energiespeichers nicht ausreicht, insbesondere einem Ladungsstand, der der vorgegebenen unteren Ladungsschwelle entspricht oder darunter liegt, gibt das Steuer- und Regelungssystem die bordeigene Primärenergiequelle für die Energieversorgung der Antriebe vor. Das Steuer- und Regelungssystems kann zudem so ausgelegt sein, dass es, sofern und solange sich der Hafenmobilkran in einem Hafenbereich befindet, in dem der Betrieb eines diesel-elektrischen Antriebs nicht erwünscht oder nicht erlaubt ist, und der Ladungsstand des Langzeit-Energiespeichers für die Energieversorgung zumindest einiger der Antriebe ausreicht, die Energieversorgung der Antriebe durch den Langzeit-Energiespeicher automatisch vorgibt. Alternativ kann die Vorgabe auch manuell durch den Kranführer erfolgen. Bei Ausfall einer der beiden Primärenergiequellen kann die jeweils andere Primärenergiequelle für die Energieversorgung der Antriebe verwendet und somit ein Normalbetrieb des Hafenmobilkrans sichergestellt werden. Bei Ausfall der ersten, externen Primärenergiequelle und der zweiten, bordeigenen Primärenergiequelle, übernimmt der Langzeit-Energiespeicher zwingend im Notbetrieb I oder im Notbetrieb II die erforderliche Energieversorgung zumindest einiger der Antriebe gemäß der oben beschriebenen Kriterien für den jeweiligen Betrieb. Die Ladung des Langzeit-Energiespeichers erfolgt über das bordeigene Kranstromnetz durch die externe Primärenergiequelle oder die bordeigene Primärenergiequelle oder durch eine Rückspeisung aus einem oder mehreren der Antriebe. Ein Hauptvorteil dieser Ausführungsform ist, dass durch den möglichen Notbetrieb I und/oder Notbetrieb II Ausfallzeiten des Hafenmobilkrans minimiert werden, die ansonsten bei einem Ausfall beider Primärenergiequellen auftreten würden, und dass ein Hilfsbetrieb mittels des Langzeit-Energiespeichers möglich ist, beispielsweise bei Verwendung des Hafenmobilkrans in einem Hafenbereich ohne Zugriff auf das Hafenstromnetz und bei Verwendung des Hafenmobilkrans in einem Hafenbereich, in dem der Betrieb eines diesel-elektrischen Antriebs nicht erwünscht oder nicht erlaubt ist. Vorteilhaft kann langfristig auf die zweite, bordeigene Primärenergiequelle verzichtet werden, um beispielsweise durch deren nachträgliches Entfernen einen Hafenmobilkran gemäß der dritten Ausführungsform in einen Hafenmobilkran gemäß der zuvor beschriebenen ersten Ausführungsform umzurüsten.

Nachfolgend werden die drei Ausführungsbeispiele der Erfindung anhand von Zeichnungen erläutert. Es zeigt:
Figur 1 eine Ansicht eines Hafenmobilkrans,
Figur 2 eine schematische Darstellung des bordeigenen Energieversorgungssystems des Hafenmobilkrans nach Figur 1 zusammen mit einer externen Primärenergiequelle,
Figur 3 eine schematische Darstellung des bordeigenen Energieversorgungssystems des Hafenmobilkrans nach Figur 1, welches eine bordeigene Primärenergiequelle umfasst und
Figur 4 eine schematische Darstellung des bordeigenen Energieversorgungssystems des Hafenmobilkrans nach Figur 1, welches eine bordeigene Primärenergiequelle umfasst, zusammen mit einer externen Primärenergiequelle.

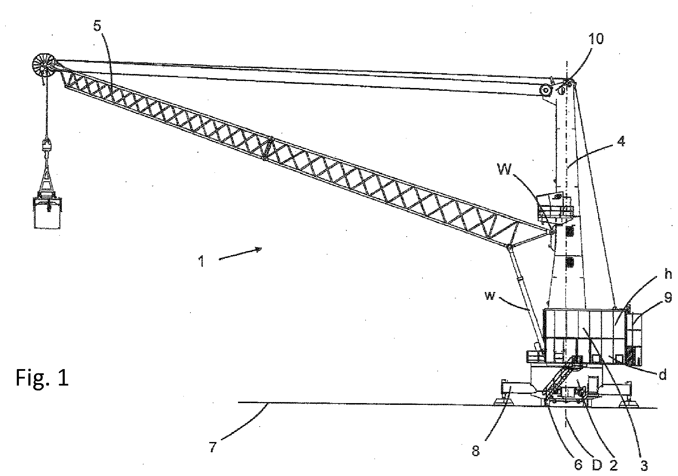

Die Figur 1 zeigt eine Ansicht eines Hafenmobilkrans 1 für den Umschlag von normierten Behältern, insbesondere von ISO-Containern, zwischen Land und Wasser beziehungsweise umgekehrt beziehungsweise innerhalb von Container-Terminals. Auch kann der Hafenmobilkran 1 mit einem Greifer zum Umschlag von Schüttgütern ausgerüstet werden. Der Hafenmobilkran 1 besteht im Wesentlichen aus einem Unterwagen 2 und einem Oberwagen 3 mit einem Turm 4 und einem Ausleger 5. In üblicher Weise wird der Hafenmobilkran 1 über seinen Unterwagen 2 auf dem Land, hier einem Kai 7, abgestützt. Über den Unterwagen 2 mit dem Fahrwerk 6, insbesondere einem Radreifenfahrwerk, ist der Hafenmobilkran 1 auf dem Kai 7 verfahrbar und wird während des Umschlagbetriebes über eine Abstützvorrichtung 8, insbesondere deren Stützen, auf diesem abgestützt. Auch ist es möglich, dass der Hafenmobilkran 1 auf Schienen verfahrbar oder stationär auf einem Schwimmponton befestigt wird. Auf dem Unterwagen 2 ist der Oberwagen 3 gelagert, der von einem Drehwerk d um eine vertikale Drehachse D und insbesondere relativ zu dem Unterwagen 2 schwenkbar ist. Das Drehwerk d weist üblicher Weise einen Drehkranz im Eingriff mit einem Antriebszahnrad auf. Der Oberwagen 3 trägt auch ein Hubwerk h und im rückwärtigen Bereich ein Gegengewicht 9. Auch ist auf dem Oberwagen 3 der sich in Vertikalrichtung erstreckende Turm 4 abgestützt, an dessen Spitze ein Rollenkopf 10 mit Seilscheiben befestigt ist. Des Weiteren ist an dem Turm 4, etwa im Bereich seiner halben Länge und auf der dem Gegengewicht 9 abgewandten Seite, der Ausleger 5 angelenkt. Der Ausleger 5 ist um eine horizontale Wippachse W schwenkbar mit dem Turm 4 verbunden und zusätzlich über ein an dem Ausleger 5 und unten an dem Oberwagen 3 angelenktes Wippwerk w, das üblicher Weise als Hydraulikzylinder ausgebildet ist, aus seiner seitlich auskragenden Betriebsstellung in eine aufrechte Ruhestellung verschwenkbar. Außerdem ist der Ausleger 5 in üblicher Weise als Gittermast ausgebildet. An der dem Turm 4 abgewandten Spitze des Auslegers 5 sind weitere Seilscheiben drehbar gelagert, über die ausgehend von dem Hubwerk h Hubseile über den Rollenkopf 10 zu der anzuhebenden Last geführt sind.

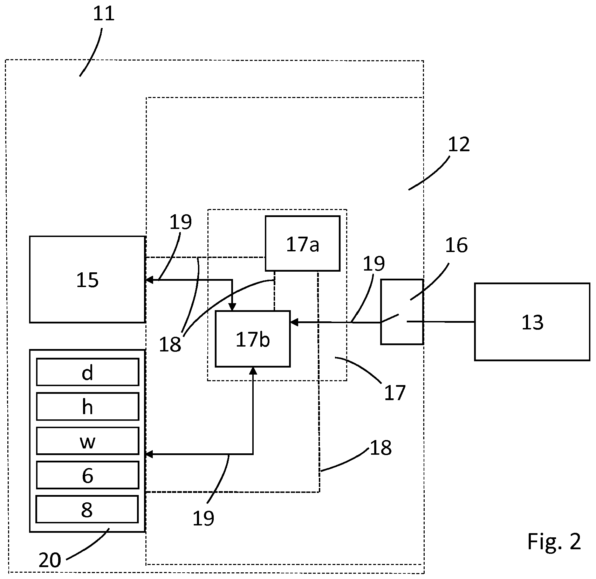

Die Figur 2 zeigt eine schematische Darstellung des bordeigenen Energieversorgungssystems 11 des Hafenmobilkranes 1 gemäß der oben beschriebenen ersten Ausführungsform. Das Energieversorgungssystem 11 umfasst hierbei ein bordeigenes Kranstromnetz 12, einen Langzeit-Energiespeicher 15 sowie ein Energieverbrauchersystem 20. Außerdem ist eine externe Primärenergiequelle 13 dargestellt, die insbesondere eine stationäre Primärenergiequelle außerhalb des Hafenmobilkrans, wie beispielsweise ein Hafenstromnetz, sein kann und zur Fremdeinspeisung von elektrischer Energie über einen Anschluss 16 an das bordeigene Kranstromnetz 12 angeschlossen ist. Der Anschluss 16 für die externe Primärenergiequelle 13 ist derart ausgebildet, dass hierüber mit der externen Primärenergiequelle13 eine Steckverbindung und/oder eine Kabelanbindung mit einer Kabeltrommel hergestellt werden kann. Das bordeigene Kranstromnetz 12 verbindet dann über seine elektrischen Verbindungen 19 ein im Kranstromnetz 12 enthaltenes Steuer- und Regelungssystem 17 mit der externen Primärenergiequelle 13, einem Energieverbrauchersystem 20, welches die Antriebe des Fahrwerks 6, der Abstützvorrichtung 8, des Drehwerks d, des Wippwerks w und des Hubwerks h umfasst, und dem Langzeit-Energiespeicher 15.

Das Steuer- und Regelungssystem 17, welches ein Steuergerät 17a und eine Regelungseinheit 17b umfasst, steuert und regelt die über die elektrischen Verbindungen 19 erfolgenden Stromflüsse. Hierzu werden Signale über die Signalverbindungen 18 vom Steuergerät 17a an die Regelungseinheit 17b, den Langzeit-Energiespeicher 15 und das Energieverbrauchersystem 20 versendet. Die Richtung der Stromflüsse ist durch die Pfeildarstellung an den elektrischen Verbindungen 19 angedeutet. Dementsprechend ist über die elektrischen Verbindungen 19 zwischen dem Langzeit-Energiespeicher 15 und dem Energieverbrauchersystem 20, insbesondere über das Steuer- und Regelungssystem 17, ein Stromfluss in beide Richtungen möglich, sodass insbesondere eine Rückspeisung aus einem generatorischen Betrieb des mindestens einen verwendeten Antriebs des Energieverbrauchersystems 20, beispielsweise des Antriebs des Hubwerks h beim Senken einer Last, zur Ladung des Langzeit-Energiespeichers 15 genutzt werden kann. Über die elektrische Verbindung 19 und den Anschluss 16 kann zwischen dem bordeigenen Kranstromnetz 12 und der externen Primärenergiequelle 13 ebenfalls eine Rückspeisung in Folge eines generatorischen Betriebs des mindestens einen verwendeten Antriebs aus dem Energieverbrauchersystem 20 erfolgen, insbesondere wenn und solange die obere Ladungsschwelle des Langzeit-Energiespeichers 15 erreicht ist.

Die externe Primärenergiequelle 13 versorgt also bei dem Hafenmobilkran 1 gemäß der ersten Ausführungsform über das bordeigene Kranstromnetz 12 das Energieverbrauchersystem 20 sowie den Langzeit-Energiespeicher 15 zu dessen Ladung mit elektrischer Energie. Sobald und solange die externe Primärenergiequelle 13 zur Versorgung des Energieverbrauchersystems 20 verfügbar und dementsprechend der Hafenmobilkran 1 im Normalbetrieb betreibbar ist, gibt das Steuer-und Regelungssystem 17 die Verwendung der externen Primärenergiequelle 13 vor. Dafür sendet das Steuergerät 17a über die Signalverbindung 18 ein Signal an die Regelungseinheit 17b, welches die elektrische Verbindung 19 zum Anschluss 16 der externen Primärenergiequelle 13 aktiviert, sowie an das Energieverbrauchersystem 20. Dadurch wird zur Energieversorgung des Energieverbrauchersystems 20 ein Stromfluss zwischen der externen Primärenergiequelle 13 und dem Energieverbrauchersystem 20, insbesondere über das Steuer- und Regelungssystem 17, bewirkt. Im Normalbetrieb sind alle Funktionen des Hafenmobilkrans 1 nutzbar und eine Überlagerung dieser Funktionen und der entsprechenden Bewegungen der zugehörigen Antriebe des Energieverbrauchersystems 20 möglich. Sofern bereitgestellte Energie der externen Primärenergiequelle 13 nicht für die Versorgung des Energieverbrauchersystems 20 genutzt wird, kann diese zur unten näher beschriebenen Ladung des Langzeit-Energiespeichers 15 verwendet werden.

Bei geplanten Unterbrechungen, insbesondere Abkopplungen, von der Versorgung der im Normalbetrieb verwendeten externen Primärenergiequelle 13, beispielsweise bei zwischenzeitlicher Verwendung des Hafenmobilkrans 1 in einem Hafenbereich ohne Zugriff auf das Hafenstromnetz, und einem Ladungsstand des Langzeit-Energiespeichers 15, der über einer vorgegebenen unteren Ladungsschwelle liegt, wird der Hilfsbetrieb angewendet. Die geplante Unterbrechung kann beispielsweise vom Kranführer veranlasst werden. Im Hilfsbetrieb lässt das Steuer- und Regelungssystem 17 eine alleinige Versorgung der Antriebe des Energieverbrauchersystems 20 mit elektrischer Energie durch den Langzeit-Energiespeicher 15 zu.

Bei ungeplanten Unterbrechungen, insbesondere durch Ausfall, von der Energieversorgung der im Normalbetrieb verwendeten externen Primärenergiequelle 13, beispielsweise bei einem Stromausfall im Hafenstromnetz, und einem Ladungsstand des Langzeit-Energiespeichers 15, der über einer vorgegebenen unteren Ladungsschwelle liegt, wird der Notbetrieb I angewendet. Anders als für einen Wechsel vom Normalbetrieb in den Hilfsbetrieb ist hierfür keine Veranlassung durch einen Kranführer erforderlich. Im Notbetrieb I weist das Steuer- und Regelungssystem 17 eine alleinige Versorgung der Antriebe des Energieverbrauchersystems 20 mit elektrischer Energie zwingend dem Langzeit-Energiespeicher 15 zu.

Um den Langzeit-Energiespeicher 15 für die Versorgung der vorgenannten Antriebe des Energieverbrauchersystems 20 im Hilfsbetrieb und Notbetrieb I zu nutzen, sendet das Steuergerät 17a jeweils ein Signal über die entsprechenden Signalverbindungen 18 zwischen Steuergerät 17a und Langzeit-Energiespeicher 15, zwischen Steuergerät 17a und Regelungseinheit 17b sowie zwischen Steuergerät 17a und Energieverbrauchersystem 20. Dadurch wird zur Energieversorgung des Energieverbrauchersystems 20 ein Stromfluss zwischen dem Langzeit-Energiespeicher 15 und dem Energieverbrauchersystem 20, insbesondere über das Steuer- und Regelungssystem 17, bewirkt. Der Langzeit-Energiespeicher 15 ist also derart ausgestaltet und eingerichtet, dass im Hilfsbetrieb und Notbetrieb I mittels des Langzeit-Energiespeichers 15 also die Energieversorgung der Antriebe des Energieverbrauchersystems 20 sichergestellt ist. Damit sind zumindest die Kran-Hauptfunktionen Fahren und Lenken des Fahrwerks 6, Abstützen der Abstützvorrichtung 8, Drehen des Drehwerks d, Wippen des Wippwerks w und Heben und Senken des Hubwerks h nutzbar. Hierbei kann jedoch als Einschränkung gegenüber dem Normalbetrieb vorgesehen sein, dass einige Funktionen, beispielsweise die Funktionen Heben, Senken, Wippen und/oder Drehen nur im Einzelmodus verwendet werden können. Im Einzelmodus ist dann eine Überlagerung dieser Funktionen und der entsprechenden Bewegungen der zugehörigen Antriebe nicht vorgesehen. Eine Überlagerung dieser Funktionen ist allerdings prinzipiell möglich. Bei Erreichen der vorgegebenen unteren Ladungsschwelle des Langzeit-Energiespeichers 15 wird automatisch eine Umschaltung in den unten näher beschriebenen Notbetrieb II bewirkt.

Bei Unterbrechungen von der Versorgung der im Normalbetrieb verwendeten externen Primärenergiequelle 13 und einem Ladungsstand des Langzeit-Energiespeichers 15, der der vorgegebenen unteren Ladungsschwelle entspricht oder darunter liegt, wird der Notbetrieb II angewendet. Im Notbetrieb II weist das Steuer-und Regelungssystem 17 die Versorgung des Antriebs des Fahrwerks 6 und/oder des Antriebs des Hubwerks h mit elektrischer Energie zwingend dem Langzeit-Energiespeicher 15 zu und beschränkt diese vorzugsweise darauf. Dafür sendet das Steuergerät 17a jeweils ein Signal über die entsprechenden Signalverbindungen 18 zwischen Steuergerät 17a und Langzeit-Energiespeicher 15, zwischen Steuergerät 17a und Regelungseinheit 17b sowie zwischen Steuergerät 17a und Antrieb des Fahrwerks 6 und/oder Antrieb des Hubwerks h. Dadurch wird zur Energieversorgung des Antriebs des Fahrwerks 6 und/oder des Antriebs des Hubwerks h ein Stromfluss zwischen dem Langzeit-Energiespeicher 15 und dem Antrieb des Fahrwerks 6 und/oder Antrieb des Hubwerks h bewirkt. Der Stromfluss kann über die elektrischen Verbindungen 19, insbesondere über das Steuer- und Regelungssystem 17, erfolgen. Der Langzeit-Energiespeicher 15 ist also derart ausgestaltet und eingerichtet, dass im Notbetrieb II mittels des Langzeit-Energiespeichers 15 also zumindest die Energieversorgung des Antriebs des Fahrwerks 6 und/oder des Antriebs des Hubwerks h sichergestellt ist. Damit sind zumindest die Kran-Hauptfunktionen Fahren und Lenken des Fahrwerks 6 und/oder Senken des Hubwerks h nutzbar, wodurch insbesondere eine Last kontrolliert abgelegt und/oder der Hafenmobilkran aus dem Arbeitsbereich und/oder Gefahrenbereich herausgefahren werden kann. Hierbei ist jedoch als Einschränkung gegenüber den vorgenannten Betriebsarten vorgesehen, dass die Kran-Hauptfunktionen Fahren und Lenken des Fahrwerks 6 und/oder Senken des Hubwerks h nur im Einzelmodus verwendet werden können. Im Einzelmodus ist dann eine Überlagerung dieser Funktionen und der entsprechenden Bewegungen der zugehörigen Antriebe nicht vorgesehen und nicht möglich.

Die Ladung des Langzeit-Energiespeichers 15 erfolgt während des Normalbetriebs über das bordeigene Kranstromnetz 12 durch die externe Primärenergiequelle 13. Dafür sendet das Steuergerät 17a ein Signal über die entsprechenden Signalverbindungen 18 zwischen Steuergerät 17a und Regelungseinheit 17b sowie zwischen Steuergerät 17a und Langzeit-Energiespeicher 15. Dadurch wird ein Stromfluss über die elektrischen Verbindungen 19 von der externen Primärenergiequelle 13 zum Langzeit-Energiespeicher 15, insbesondere über das Steuer- und Regelungssystem 17, zu dessen Ladung bewirkt. Zusätzlich kann auch eine Rückspeisung aus einem generatorischen Betrieb des mindestens einen Antriebs, beispielsweise des Antriebs des Hubwerks h beim Senken einer Last, zur Ladung des Langzeit-Energiespeichers 15 genutzt werden. Dafür sendet das Steuergerät 17a ein entsprechendes Signal über die Signalverbindungen 18 zwischen Steuergerät 17a und Regelungseinheit 17b, zwischen Steuergerät 17a und Energieverbrauchersystem 20 sowie zwischen Steuergerät 17a und Langzeit-Energiespeicher 15. Es ergibt sich dadurch ein Stromfluss von dem Energieverbrauchersystem 20 zum Langzeit-Energiespeicher 15, insbesondere über das Steuer- und Regelungssystem 17, zu dessen Ladung. Eine schonende Ladung des Langzeit-Energiespeichers 15 wird in vorteilhafter Weise dadurch erhöht, dass das Steuer- und Regelungssystem 17, insbesondere das darin enthaltene Managementsystem für den Langzeit-Energiespeicher 15, beim Laden vorzugsweise eine Ladung des Langzeit-Energiespeichers 15 nur bis zu einer vorgegebenen oberen Ladungsschwelle zulässt, insbesondere um eine Überladung des Langzeit-Energiespeichers 15 zu vermeiden.

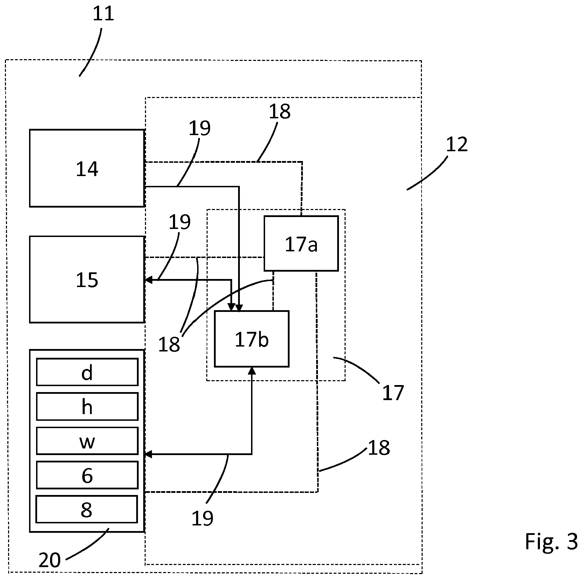

Die Figur 3 zeigt eine schematische Darstellung des bordeigenen Energieversorgungssystems 11 des Hafenmobilkrans 1 gemäß der oben beschriebenen zweiten Ausführungsform. Die zweite Ausführungsform unterscheidet sich von der in Figur 2 beschriebenen Ausführungsform im Wesentlichen dadurch, dass als Primärenergiequelle eine bordeigene Primärenergiequelle 14, die Teil des bordeigenen Energieversorgungssystems 11 ist, statt einer externen Primärenergiequelle 13 verwendet wird. Die bordeigene Primärenergiequelle 14 kann insbesondere einen diesel-elektrischen Antrieb umfassen. Der Hafenmobilkran 1 weist keinen Anschluss für eine externe Primärenergiequelle 13 auf. Zwischen der bordeigenen Primärenergiequelle 14 und dem Steuergerät 17a besteht eine Signalverbindung 18, über welche die bordeigene Primärenergiequelle 14 so angesteuert werden kann, dass die benötigte Energie für die Energieverbrauchersystem 20 bereitgestellt wird. Hierzu wird über die elektrischen Verbindungen 19 von der bordeigenen Primärenergiequelle 14 zum Energieverbrauchersystem 20, insbesondere über das Steuer- und Regelungssystem 17, ein Stromfluss bewirkt. Es ist keine Rückspeisung von Energie aus dem Verbrauchersystem 20 in die bordeigene Primärenergiequelle 14 vorgesehen. Im Übrigen gelten die Ausführungen zu Figur 2 analog auch für die in Figur 3 gezeigte Ausführungsform.

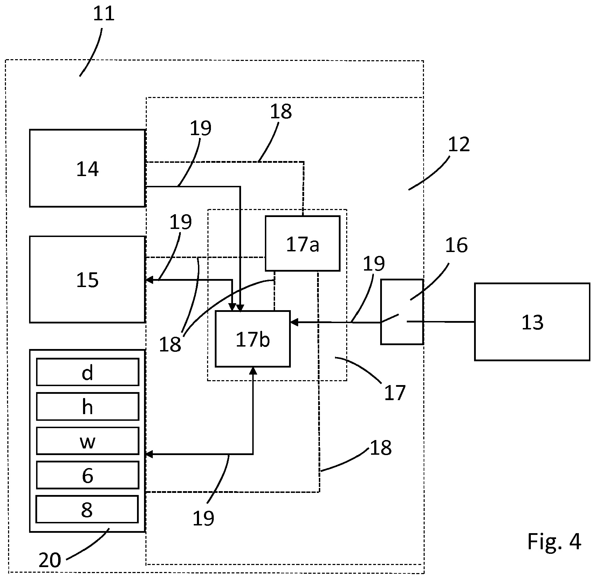

Die Figur 4 zeigt eine schematische Darstellung des bordeigenen Energieversorgungssystems 11 des Hafenmobilkrans 1 gemäß der oben beschriebenen dritten Ausführungsform. Diese Ausführungsform entspricht hinsichtlich seiner Komponenten im Wesentlichen einer Kombination der in den Figuren 2 und 3 beschriebenen Ausführungsformen. Einige Besonderheiten zu den Betriebsarten der dritten Ausführungsform werden im Folgenden beschrieben.

Sobald und solange die externe Primärenergiequelle 13 verfügbar ist und dementsprechend der Hafenmobilkran 1 im Normalbetrieb betreibbar ist, gibt das Steuer-und Regelungssystem 17 die Verwendung dieser Energiequelle zur Versorgung der Antriebe des Energieverbrauchersystems 20 und zur Ladung des Langzeit-Energiespeichers 15 vor. Falls die externe Primärenergiequelle 13 nicht verfügbar ist, gibt das Steuer- und Regelungssystem 17 die Verwendung der bordeigenen Primärenergiequelle 14 zur Versorgung der Antriebe des Energieverbrauchersystems 20 und zur Ladung des Langzeit-Energiespeichers 15 vor, wobei auch hier der Hafenmobilkran 1 im Normalbetrieb betreibbar ist.

Im Hilfsbetrieb lässt das Steuer-und Regelungssystem 17 eine Energieversorgung der Antriebe des Energieverbrauchersystems 20 sowohl durch die bordeigene Primärenergiequelle 13 als auch durch den Langzeit-Energiespeicher 15 zu. Falls der Ladungsstand des Langzeit-Energiespeichers 15 nicht ausreicht, gibt das Steuer- und Regelungssystem 17 die bordeigene Primärenergiequelle 14 für die Energieversorgung der Antriebe des Energieverbrauchersystems 20 vor. Das Steuer-und Regelungssystem 17 kann zudem so ausgelegt sein, dass es, sofern und solange sich der Hafenmobilkran 1 in einem Hafenbereich befindet, in dem der Betrieb der bordeigenen Primärenergiequelle 14, insbesondere eines diesel-elektrischen Antriebs hiervon, nicht erwünscht oder nicht erlaubt ist, und der Ladungsstand des Langzeit-Energiespeichers 15 für die Energieversorgung zumindest einiger der Antriebe des Energieverbrauchersystems 20 ausreicht, die Energieversorgung der Antriebe des Energieverbrauchersystems 20 durch den Langzeit-Energiespeicher 15 automatisch vorgibt. Alternativ kann die Vorgabe auch manuell durch den Kranführer erfolgen.

Bei Ausfall einer der beiden Primärenergiequellen 13 oder 14 kann die jeweils andere Primärenergiequelle 13 oder 14 für die Energieversorgung der Antriebe des Energieverbrauchersystems 20 verwendet und somit ein Normalbetrieb des Hafenmobilkrans sichergestellt werden.

Bei Ausfall der ersten, externen Primärenergiequelle 13 und der zweiten, bordeigenen Primärenergiequelle 14, übernimmt der Langzeit-Energiespeicher 15 zwingend im Notbetrieb I oder Notbetrieb II die erforderliche Energieversorgung zumindest einiger der Antriebe des Energieverbrauchersystems 20. Die Ladung des Langzeit-Energiespeichers 15 erfolgt im Normalbetrieb über das bordeigene Kranstromnetz 12 durch die externe Primärenergiequelle 13 oder die bordeigene Primärenergiequelle 14 oder durch eine Rückspeisung aus einem oder mehreren der Antriebe.

### Bezugszeichenliste

- 1: Hafenmobilkran
- 2: Unterwagen
- 3: Oberwagen
- 4: Turm
- 5: Ausleger
- 6: Fahrwerk
- 7: Kai
- 8: Abstützvorrichtung
- 9: Gegengewicht
- 10: Rollenkopf
- 11: bordeigenes Energieversorgungssystem
- 12: bordeigenes Kranstromnetz
- 13: externe Primärenergiequelle
- 14: bordeigene Primärenergiequelle
- 15: Langzeit-Energiespeicher
- 16: Anschluss
- 17: Steuer- und Regelungssystem
- 17a: Steuergerät
- 17b: Regelungseinheit
- 18: Signalverbindung
- 19: elektrische Verbindung
- 20: Energieverbrauchersystem
- d: Drehwerk
- D: Drehachse
- w: Wippwerk
- W: Wippachse
- h: Hubwerk

## Patentansprüche

1. Hafenmobilkran (1) mit einem Unterwagen (2) und einem daran befestigten Fahrwerk (6) mit einer Abstützvorrichtung (8), einem Oberwagen (3) mit einem sich in Vertikalrichtung erstreckenden Turm, einem den Oberwagen (3) mit dem Unterwagen (2) verbindenden Drehwerk (d), einem Ausleger (5), einem den Ausleger (5) mit dem Oberwagen (3) verbindenden Wippwerk (w), und einem Hubwerk (h), wobei der Hafenmobilkran (1) ein bordeigenes Energieversorgungssystem (11) zur Versorgung von Antrieben des Fahrwerks (6), der Abstützvorrichtung (8), des Drehwerks (d), des Wippwerks (w) und des Hubwerks (h) mit elektrischer Energie aufweist, wobei die Antriebe in einem Normalbetrieb des Hafenmobilkrans (1) mit der benötigten elektrischen Energie von einer Primärenergiequelle (13; 14) versorgt werden, wobei die elektrische Energie über ein im bordeigenen Energieversorgungssystem (11) vorhandenes bordeigenes Kranstromnetz (12) übertragen wird, **dadurch gekennzeichnet, dass** das bordeigene Energieversorgungssystem (11) für einen Hilfsbetrieb und/oder einen Notbetrieb I und/oder einen Notbetrieb II des Hafenmobilkrans (1) einen Langzeit-Energiespeicher (15) aufweist, um im Hilfsbetrieb und/oder im Notbetrieb I und/oder im Notbetrieb II zumindest einige der Antriebe (6; 8; d; w; h) über das bordeigene Kranstromnetz (12) durch den Langzeit-Energiespeicher (15) anstatt durch die Primärenergiequelle (13; 14) mit der benötigten elektrischen Energie zu versorgen, wobei das bordeigene Energieversorgungssystem (11) ein Steuer- und Regelungssystem (17) umfasst, das im Hilfsbetrieb eine alleinige Versorgung der Antriebe des Fahrwerks (6), der Abstützvorrichtung (8), des Drehwerks (d), des Wippwerks (w) und des Hubwerks (h) mit elektrischer Energie durch den Langzeit-Energiespeicher (15) zulässt und/oder im Notbetrieb I eine alleinige Versorgung der Antriebe des Fahrwerks (6), der Abstützvorrichtung (8), des Drehwerks (d), des Wippwerks (w) und des Hubwerks (h) mit elektrischer Energie dem Langzeit-Energiespeicher (15) zwingend zuweist und/oder im Notbetrieb II die Versorgung des Antriebs des Fahrwerks (6) und/oder des Antriebs des Hubwerks (h) mit elektrischer Energie dem Langzeit-Energiespeicher (15) zwingend zuweist und vorzugsweise hierauf beschränkt, wobei das Steuer- und Regelungssystem (17) im Notbetrieb II eine Entladung des Langzeit-Energiespeichers (15) auch unterhalb der vorgegebenen unteren Ladungsschwelle zulässt.

2. Hafenmobilkran (1) nach Anspruch 1, **dadurch gekennzeichnet, dass** der Langzeit-Energiespeicher (15) derart ausgestaltet und eingerichtet ist, dass im Hilfsbetrieb und/oder im Notbetrieb I mittels des Langzeit-Energiespeichers (15) die Energieversorgung der Antriebe des Fahrwerks (6), der Abstützvorrichtung (8), des Drehwerks (d), des Wippwerks (w) und des Hubwerks (h) sichergestellt ist, damit zumindest die Kran-Hauptfunktionen Fahren und Lenken des Fahrwerks (6), Abstützen der Abstützvorrichtung (8), Drehen des Drehwerks (d), Wippen des Wippwerks (w) und Heben und Senken des Hubwerks (h) nutzbar sind.

3. Hafenmobilkran (1) nach Anspruch 1 oder 2, **dadurch gekennzeichnet, dass** der Langzeit-Energiespeicher (15) derart ausgestaltet und eingerichtet ist, dass im Notbetrieb II mittels des Langzeit-Energiespeichers (15) zumindest die Energieversorgung des Antriebs des Fahrwerks (6) und/oder des Antriebs des Hubwerks (h) sichergestellt ist, damit zumindest die Kran-Hauptfunktionen Fahren und Lenken des Fahrwerks (6) und/oder Senken des Hubwerks (h) nutzbar sind, insbesondere eine Last kontrolliert abgelegt und/oder der Hafenmobilkran (1) aus dem Arbeitsbereich und/oder dem Gefahrenbereich herausgefahren werden kann.

4. Hafenmobilkran (1) nach einem der Ansprüche 1 bis 3, **dadurch gekennzeichnet, dass** das Steuer- und Regelungssystem (17) im Hilfsbetrieb und/oder im Notbetrieb I eine Entladung des Langzeit-Energiespeichers (15) nur bis zu einer vorgegebenen unteren Ladungsschwelle zulässt, insbesondere um in einem etwaigen Notbetrieb II die erforderliche Energie zur Verfügung stellen zu können.

5. Hafenmobilkran (1) nach einem der vorangegangenen Ansprüche, **dadurch gekennzeichnet, dass** die Ladung des Langzeit-Energiespeichers (15) über das bordeigene Kranstromnetz (12) durch die im Normalbetrieb verwendete Primärenergiequelle (13; 14) erfolgt.

6. Hafenmobilkran (1) nach einem der vorangegangenen Ansprüche, **dadurch gekennzeichnet, dass** das bordeigene Energieversorgungssystem (11) durch einen im bordeigenen Kranstromnetz (12) vorhandenen Anschluss (16) an eine externe Primärenergiequelle (13), insbesondere ein Hafenstromnetz, anschließbar ist.

7. Hafenmobilkran (1) nach einem der vorangegangenen Ansprüche, **dadurch gekennzeichnet, dass** das bordeigene Energieversorgungssystem (11) eine bordeigene Primärenergiequelle (14), insbesondere einen diesel-elektrischen Antrieb, aufweist.

8. Hafenmobilkran (1) nach einem der vorangegangenen Ansprüche, **dadurch gekennzeichnet, dass** der Langzeit-Energiespeicher (15) mindestens eine wiederaufladbare Batterie, vorzugsweise eine Li-lonen-Batterie, umfasst.

## Claims

1. Mobile harbor crane (1) with an undercarriage (2) and a running gear (6) attached thereto with a support device (8), an upper carriage (3) with a tower extending in the vertical direction, a slewing gear (d) connecting the upper carriage (3) to the undercarriage (2), a jib (5), a luffing gear (w) connecting the jib (5) to the upper carriage (3), and a hoisting gear (h), wherein the mobile harbor crane (1) has an on-board energy supply system (11) for supplying drives of the running gear (6), the support device (8), the slewing gear (d), the luffing gear (w) and the hoisting gear (h) with electrical energy, wherein in normal operation of the mobile harbor crane (1) the drives are supplied with the required electrical energy from a primary energy source (13; 14), the electrical energy being transmitted via an on-board crane power grid (12) provided in the on-board power supply system (11),
**characterized in that** the on-board power supply system (11) has a long-term energy store (15) for an auxiliary operation and/or an emergency operation I and/or an emergency operation II of the mobile harbor crane (1) in order to supply at least some of the drives (6; 8; d; w; h) via the on-board crane power grid (12) through the long-term energy store (15) instead of through the primary energy source (13; 14), wherein the on-board energy supply system (11) comprises a control system (17) which, in auxiliary operation, permits the drives of the running gear (6), the support device (8), the slewing gear (d), the luffing gear (w) and the hoisting gear (h) to be supplied solely with electrical energy by the long-term energy store (15) and/or, in emergency operation I, mandatorily assigns to the long-term energy store (15) the sole supply of electrical energy to the drives of the running gear (6), the support device (8), the slewing gear (d), the luffing gear (w) and the hoisting gear (h) and/or, in emergency operation II, mandatorily assigns to the long-term energy store (15) the supply of electrical energy to the drive of the running gear (6) and/or the drive of the lifting gear (h) and preferably limits it to this, wherein the control system (17) in emergency operation II also permits discharging of the long-term energy store (15) below the predetermined lower charging threshold.

2. Mobile harbor crane (1) according to claim 1, **characterized in that** the long-term energy store (15) is designed and set up in such a way that in auxiliary operation and/or in emergency operation I, the energy supply to the drives of the running gear (6), the support device (8), the slewing gear (d), the luffing gear (w) and the hoisting gear (h) is ensured by means of the long-term energy store (15) so that at least the main crane functions driving and steering of the running gear (6), supporting the support device (8), slewing the slewing gear (d), luffing the luffing gear (w) and raising and lowering the hoisting gear (h) can be used.

3. Mobile harbor crane (1) according to claim 1 or 2, **characterized in that** the long-term energy store (15) is designed and set up in such a way that in emergency operation II at least the energy supply to the drive of the running gear (6) and/or the drive of the hoisting gear (h) is ensured by means of the long-term energy store (15), so that at least the main crane functions driving and steering of the running gear (6) and/or lowering the hoisting gear (h) can be used, in particular a load can be set down in a controlled manner and/or the mobile harbor crane (1) can be moved out of the working area and/or the danger zone.

4. Mobile harbor crane (1) according to one of claims 1 to 3, **characterized in that** the control system (17) in auxiliary operation and/or in emergency operation I permits discharging of the long-term energy store (15) only up to a predetermined lower charging threshold, in particular in order to be able to provide the required energy in any emergency operation II.

5. Mobile harbor crane (1) according to one of the preceding claims, **characterized in that** the long-term energy store (15) is charged via the on-board crane power grid (12) by the primary energy source (13; 14) used in normal operation.

6. Mobile harbor crane (1) according to one of the preceding claims, **characterized in that** the on-board energy supply system (11) can be connected to an external primary energy source (13), in particular a harbor power grid, by means of a connection (16) provided in the on-board crane power grid (12).

7. Mobile harbor crane (1) according to one of the preceding claims, **characterized in that** the on-board energy supply system (11) has an on-board primary energy source (14), in particular a diesel-electric drive.

8. Mobile harbor crane (1) according to one of the preceding claims, **characterized in that** the long-term energy store (15) comprises at least one rechargeable battery, preferably a Li-ion battery.

## Revendications

1. Grue portuaire mobile (1) comprenant une infrastructure (2) et un mécanisme de roulement (6) fixé à ladite infrastructure et pourvu d'un dispositif de support (8), une superstructure (3) pourvue d'une tour qui s'étend dans la direction verticale, un mécanisme de rotation (d) qui relie la superstructure (3) à l'infrastructure (2), une flèche (5), un mécanisme de variation de volée (w) qui relie la flèche (5) à la superstructure (3), et un mécanisme de levage (h), la grue portuaire mobile (1) comportant un système d'alimentation en énergie embarqué (11) destiné à alimenter le mécanisme de roulement (6), le dispositif de support (8), le mécanisme de rotation (d), le mécanisme de variation de volée (w) et le mécanisme de levage (h) en énergie électrique, les entraînements étant alimentés en énergie électrique nécessaire à partir d'une source d'énergie primaire (13 ; 14) pendant le fonctionnement normal de la grue portuaire mobile (1), l'énergie électrique étant transmise par le biais d'un réseau électrique de grue embarqué (12) présent dans le système d'alimentation en énergie embarqué (11), **caractérisé en ce que** le système d'alimentation en énergie embarqué (11) comporte un accumulateur d'énergie de longue durée (15) destiné à un fonctionnement auxiliaire et/ou un fonctionnement d'urgence I et/ou un fonctionnement d'urgence II de la grue portuaire mobile (1) afin d'alimenter en énergie électrique nécessaire au moins une partie des entraînements (6 ; 8 ; d ; w ; h ) par l'accumulateur d'énergie de longue durée (15) au lieu de la source d'énergie primaire (13 ; 14), par le biais du réseau électrique de grue embarqué (12), dans le fonctionnement auxiliaire et/ou dans le fonctionnement de secours I et/ou dans le fonctionnement de secours II, le système d'alimentation en énergie embarqué (11) comprenant un système de commande et de régulation (17) qui, dans le fonctionnement auxiliaire, autorise l'alimentation exclusive des entraînements du mécanisme de roulement (6), du dispositif de support (8), du mécanisme de rotation (d), du mécanisme de variation de volée (w) et du mécanisme de levage (h) en énergie électrique par l'accumulateur d'énergie de longue durée (15) et/ou qui, dans le fonctionnement de secours I, autorise impérativement l'alimentation exclusive des entraînements du mécanisme de roulement (6), du dispositif de support (8), du mécanisme de rotation (d), du mécanisme de variation de volée (w) et le mécanisme de levage (h) en énergie électrique par l'accumulateur d'énergie de longue durée (15) et/ou qui, dans le fonctionnement de secours II, autorise impérativement l'alimentation de l'entraînement du mécanisme de roulement (6) et/ou l'entraînement du mécanisme de levage (h) en énergie électrique par l'accumulateur d'énergie de longue durée (15) et de préférence de manière limitée à celui-ci, le système de commande et de régulation (17) autorisant, dans le fonctionnement d'urgence II, une décharge de l'accumulateur d'énergie de longue durée (15) même au-dessous du seuil de charge inférieur spécifié.

2. Grue portuaire mobile (1) selon la revendication 1, **caractérisée en ce que** l'accumulateur d'énergie de longue durée (15) est conçu et adapté de manière à assurer, dans le fonctionnement auxiliaire et/ou dans le fonctionnement de secours I, l'alimentation en énergie des entraînements du mécanisme de roulement (6), du dispositif de support (8), du mécanisme de rotation (d), du mécanisme de variation de volée (w) et du mécanisme de levage (h) afin de pouvoir utiliser au moins les fonctions principales de la grue que sont le roulement et la direction du mécanisme de roulement (6), le support du dispositif de support (8), la rotation du mécanisme de rotation (d), la variation de volée du mécanisme de variation de volée (w) et le levage et l'abaissement du mécanisme de levage (h).

3. Grue portuaire mobile (1) selon la revendication 1 ou 2, **caractérisée en ce que** l'accumulateur d'énergie de longue durée (15) est conçu et adapté de manière à assurer, dans le fonctionnement d'urgence II, au moyen de l'accumulateur d'énergie de longue durée (15), au moins l'alimentation en énergie de l'entraînement du mécanisme de roulement (6) et/ou l'entraînement du mécanisme de levage (h) afin de pouvoir utiliser au moins les fonctions principales de la grue que sont le roulement et la direction du mécanisme de roulement (6), et/ou l'abaissement du mécanisme de levage (h), en particulier une charge est déposée de manière contrôlée et/ou la grue portuaire mobile (1) peut être déplacée hors de la zone de travail et/ou de la zone dangereuse.

4. Grue portuaire mobile (1) selon l'une des revendications 1 à 3, **caractérisée en ce que**, dans le fonctionnement auxiliaire et/ou dans le fonctionnement de secours I, le système de commande et de régulation (17) autorise la décharge de l'accumulateur d'énergie de longue durée (15) uniquement jusqu'à un seuil de charge inférieur spécifié, notamment afin de pouvoir fournir l'énergie requise dans un éventuel fonctionnement d'urgence II.

5. Grue portuaire mobile (1) selon l'une des revendications précédentes, **caractérisée en ce que** la charge de l'accumulateur d'énergie de longue durée (15) est effectuée par le biais du le réseau électrique de grue embarqué (12) par la source d'énergie primaire (13 ; 14) utilisée dans le fonctionnement normal.

6. Grue portuaire mobile (1) selon l'une des revendications précédentes, **caractérisée en ce que** le système d'alimentation en énergie embarqué (11) peut être raccordé à une source d'énergie primaire externe (13), notamment un réseau électrique portuaire, par l'intermédiaire d'un raccordement (16) présent dans le réseau électrique de grue embarqué (12).

7. Grue portuaire mobile (1) selon l'une des revendications précédentes, **caractérisée en ce que** le système d'alimentation en énergie embarqué (11) comporte une source d'énergie primaire embarquée (14), en particulier un entraînement diesel-électrique.

8. Grue portuaire mobile (1) selon l'une des revendications précédentes, **caractérisée en ce que** l'accumulateur d'énergie de longue durée (15) comprend au moins une batterie rechargeable, de préférence une batterie à ions lithium.
